(19) 

Europäisches
Patentamt
European
Patent Office
Office européen
des brevets

(11) **EP 4 576 839 A2**

(12) **EUROPEAN PATENT APPLICATION**

(43) Date of publication:
**25.06.2025 Bulletin 2025/26**

(21) Application number: **24209803.6**

(22) Date of filing: **30.10.2024**

(51) International Patent Classification (IPC):
*H04W 4/02* (2018.01)     *G01S 5/02* (2010.01)

(52) Cooperative Patent Classification (CPC):
**H04W 4/023;** G01S 5/0284; H04W 4/80

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.12.2023 US 202318542830**

(71) Applicant: **Intel Corporation
Santa Clara, CA 95054 (US)**

(72) Inventors:
• **BANAVARA, Prasanna Ramarao
Bangalore 560078 (IN)**
• **CHOUDHURY, Deepika
Bengaluru (IN)**
• **JAGADISH, Arun
Bangalore 560052 (IN)**
• **KAMADOLLI, Karunakar
Bangalore (IN)**

• **KAPILA, Smit
Bangalore 560102 (IN)**
• **KUMARAPPAN, Jayakumar
Bangalore 560068 (IN)**
• **MASTI, Sandeep
Bengaluru 560103 (IN)**
• **R, Rahul
Aluva 683102 (IN)**
• **SINGH, Balvinder Pal
Bhilai 490020 (IN)**
• **BHASIN, Sheetal
Bangalore 560048 (IN)**
• **HIREGOUDAR, Vijayakumar
Bangalore 560100 (IN)**
• **MITTY, Harish
Bangalore 560097 (IN)**
• **THAKUR, Jayprakash
Bangalore 560035 (IN)**

(74) Representative: **Viering, Jentschura & Partner
mbB
Patent- und Rechtsanwälte
Am Brauhaus 8
01099 Dresden (DE)**

(54) **DYNAMIC SPATIAL DETECTION AND HANDOVER OF PERIPHERAL DEVICE GROUP**

(57)    A first device includes a processor, which configured to determine an identifier of a second wireless device based on a first wireless signal from the second device; determine a position of the second device based on a second wireless signal from a third device; and generate a map of the second device relative to the first device.

EP 4 576 839 A2

```
┌─────────────┐   ┌─────────────┐   ┌─────────────┐   ┌─────────────┐
│IOPG Device 1│   │IOPG Device 2,3│ │ RSCD-1 706  │   │ RSCD-2 708  │
│    702      │   │    704      │   │             │   │             │
└──────┬──────┘   └──────┬──────┘   └──────┬──────┘   └──────┬──────┘
       │                 │                 │                 │
   ┌───┴─────────────────────────────────────────────────────────────┐
   │ 710                                                              │
   │              Initial configuration.                             │
   │   Bluetooth Low Energy Application Configured on IOPGs and RSCDs.│
   │ (Table with sequence of devices stored by application into RSCD and IOPG memory)│
   └───┬─────────────────────────────────────────────────────────────┘
       │                 │                 │                 │
   ┌───┴─────────────────────────────────────────────────────┐       │
   │ 712        IOPG devices are connected concurrently on RSCD-1 │   │
   └───┬─────────────────────────────────────────────────────┘       │
```

Trigger
action
714

716 Trigger Action transmitted

Application detects trigger
action 718

Gesture detection, identification
of next device 720

Schedule directed
advertisement to
next RSCD 722

Confirm 724

Initiate detach 726

Detach done 727

Direct advertisements for RSCD2 connection 728

Connection request 730

Connection complete 732

Schedule directed
advertisement to
next RSCD 734

Confirm 736

Initiate detach 738

Detach done 740

Direct advertisements for RSCD2 connection 742

Connection request 744

Connection complete 746

**FIG. 7**

## Description

### Technical Field

Various aspects of this disclosure generally relate to the spatial detection of a peripheral device group and the handover of a peripheral device group from between host devices.

### Background

Users of central computing devices (e.g., a Laptop, desktop computer, tablet computer, or other mobile computing device) commonly have several wired and/or wireless peripheral devices or assisting devices, such as a keyboard, a mouse, multiple displays, headsets/earbuds, or docking stations, which may generally be connected to the central computational device. In such a multidevice environment (MDE), many applications (e.g., screen sharing applications, find my device applications, music (audio streaming) applications, voice (e.g., an audio call) applications, video sharing applications, etc.) may require the operating system to know the peripheral device's current spatial position in 3D space, relative to the central device's current position on the desk or in a room. Moreover, as devices transition more to wireless domains, the spatial position of the devices is becoming more dynamic than in the static workplace of the past.

Users may switch between multiple central devices during a particular activity or within a time frame (e.g. at the end of a shift, a certain number of times per day, etc.). For such switches, it may be necessary to move the peripherals from a first central device to a second central device.

In the course of a task, it may be desirable to detect the spatial location of a peripheral device, such as in 3D space. The lack of an ability to detect peripherals in three dimensions may make it difficult to determine the location of a peripheral (e.g. the device is generally to the right of a user, but it cannot be visualized because it is in a drawer or under a desk). Further, the lack of a suitable detection mechanism may create confusion for users, in terms of the peripherals, to which the running media is currently routed. Such confusion may lead to a suboptimal user experience.

Furthermore, even once the devices are detected (e.g. within 3D space), there is currently no mechanism to automatically and seamlessly switch a set (e.g. a group) of peripherals from a first central device to a second central device. Instead, the user typically needs to disconnect the peripheral devices (e.g. manually disconnect the peripheral devices and/or reconfigure their connection at the second central device) from the first central device and then reconnect the new peripheral device to the new central device, often one peripheral device at a time. This may result in a suboptimal user experience for a user switching from a first central device to a second central device.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:

FIG. 1 depicts a first common peripheral configuration;
FIG. 2 depicts a second common peripheral configuration;
FIG. 3 depicts a topographic map of peripheral position identification;
FIG. 4 depicts an exemplary map of live movement;
FIG. 5 depicts a mapping of peripheral devices into a peripheral device group;
FIG. 6 depicts the configuration and trigger of a peripheral device handover;
FIG. 7 depicts a process for transferring a peripheral device group IOPG;
FIG. 8 depicts a flow diagram for the use of a Hall sensor as a trigger action; and
FIG. 9 depicts a system diagram.

### Description

The following detailed description refers to the accompanying drawings that show, by way of illustration, exemplary details and embodiments in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPointTM, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/-formula/relationship and 'indirect' calculations via lookup or hash tables and other array indexing or searching operations.

The principles and methods disclosed herein may be based on low energy techniques like Bluetooth Low Energy (BLE) and allow the use of trigger actions or gestures to control or prompt the shifting of the desired groups of peripherals to change connections from a first central device to a second central device. The principles and methods disclosed herein allow for the detection of devices, along with their positions, type of device (e.g. a mouse, a keyboard, a monitor, etc.), and the name of the device. They may provide an improved user experience by simplifying the use of multiple devices across in an environment and among environments. They may simplify location of lost or misplaced devices by mapping their location and/or causing them to ring or otherwise produce a signal that can be perceived by human senses. They may permit real-time tracking of peripheral movement, as well as auto-routing of media to the relevant peripheral or peripherals. They may allow for initiation of a peripheral group transfer based on unique and optionally user-definable gestures (e.g. Concentric clockwise movement of the mouse). They may optionally be combined with existing sensors of the central device to prompt a peripheral group transfer (e.g. a hall sensor-based tap detection). They may enable a fast switch between central devices (such as by using BLE beacons with "Directed advertisements (MAC targeted Beacons)".

A common operating system includes a mechanism for positioning of wired displays relative to the central, but this mechanism is static in nature. This solution is only for wired displays (e.g. not relevant / operational with other peripherals) and has no intelligence in that it cannot automatically detect on which side of the central device the display is located. That is, each time that the user connects the displays to the central device, the user must either be sure to connect a left-sided display (e.g. a display to the left of the central) to a port configured for a left-sided display and connect a right-sided display (e.g. a display to the right of the central) to a port configured for a right-sided display, or the user must use this existing operating system mechanism to attribute a side (e.g. relative to the central device) to each connected display.

It may be known to utilize ultrasound sensors for detection of a position of a peripheral device relative to a central device; however, such ultrasound-based detection is limited in that a) ultrasound-based detection requires a line-of-sight between the ultrasound sensor and the peripheral device to be detected; ultrasound detection requires additional hardware (e.g. in the central device); ultrasound detection cannot determine what class of peripheral is available (e.g., whether a display, a mouse, a keyboard, a headset, etc.). The result of an ultrasound detection is simply that some kind of device has been detected in a direction relative to the central device, but this is ultimately insufficient for the kinds of detection aimed for herein.

Regarding handover, efforts to simplify peripheral handover between central devices have primarily relied on hardware solutions, such as a keyboard, video, and mouse (KVM) switch, which is limited to wired peripherals, is generally limited to two central devices, and is not scalable. There is also an operating system option, which may automatically connect to a known, nearby Bluetooth peripheral once that peripheral has been manually switched into pairing mode. This still requires a manually switching of each individual device into pairing mode and is not scalable.

Turning first to the issue of locating peripherals relative to the central device, and given the concept of connected workplaces, ease of connectivity and seamless usage is believed to lead to improved user experience.

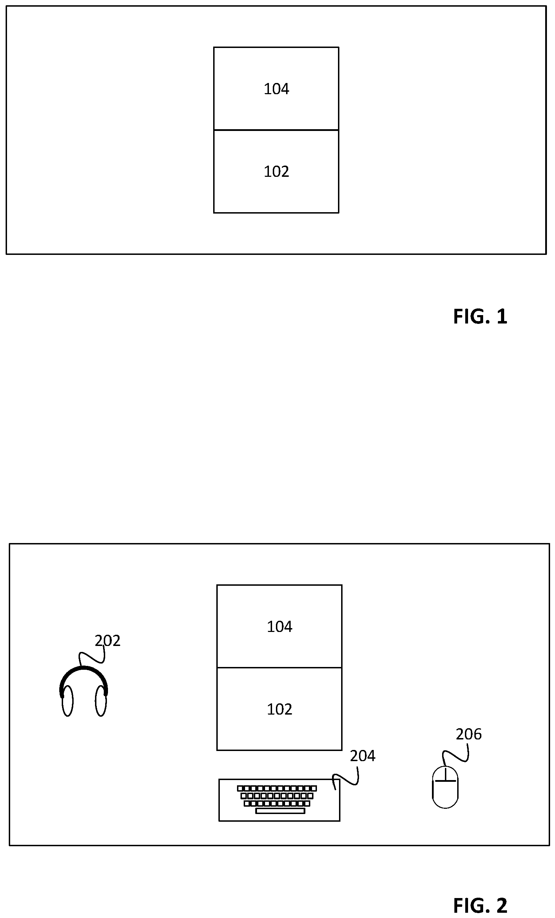

For illustration purposes, FIG. 1 depicts a common peripheral configuration in which a first display 102 and a second display 104 are each connected to a computing device. A module of the computing device's operating system may include a means for a physical configuration of the monitors to be input. For wired displays, this essentially amounts to attributing a first display feed to a first display port, and attributing a second display feed to a second display port. For wireless displays, however, such displays are not connected to a physical display port, and therefore it becomes necessary to understand the physical arrangement of the displays relative to each other (e.g., which display is on the right and which is on the left; or which display is on the top and which is on the bottom). FIG. 2 depicts a common peripheral device arrangement including the first display 102, the second display 104, a headset 202, a keyboard 204, and a mouse 206. Any or all of these peripheral devices may be wireless. For certain operational aspects, it may be desirable for the central device (the computer to which these peripherals are connected) to have information about the locations of these peripheral devices relative to the central device. In other instances, it may be desirable for a user to have information about the locations of the peripheral devices (e.g. such as in a 3D space).

To determine the positions of the connected peripheral device, the localized connected networks may be identified and marked based on the current central device along with all its available peripheral devices. In a dynamically changing work environment, and with home setups, a central device may be concurrently connected to a plurality of wired and wireless devices (e.g. peripheral devices). Usage of, and services with, these peripheral devices may depend on the peripherals' spatial positioning relative to the central device. In some circumstances, the position of the peripheral devices relative to the central device may become significant for media-routing decisions.

Low energy techniques (such as Bluetooth Low Energy (BLE)) may be used in conjunction with assistance from a wireless access point (e.g. a wireless router) to determine the position (direction and distance) of the peripherals relative to central device. Once a positon is determined, changes in said position can be tracked and mapped. This can be achieved using assistance from an Edge router, a Wi-Fi access point, or a Bluetooth access point. That is, using an access point or an edge router, the access point or the edge router may determine an angle of arrival (AoA) and a Time of Fight (ToF) to locate the peripheral device relative to the access point or router. This may be done using any known method, which may include using a Bluetooth radio or an ultra wide band UWB based detection method, as available.

First, an Edge-Router or a Wi-Fi access point (AP) may map the exact position of the peripherals relative to the central device. This may be done by utilizing AoA detection in conjunction with ToF. Modern edge-routers or Wi-Fi APs routinely include a plurality of antennas for transmission or reception, and are capable of performing a variety of beamforming functions. Such Edge-Routers or Wi-Fi APs are generally capable of performing an AoA, and many such edge-routers and Wi-Fi APs include protocols for AoA determination. Any known method or protocol for AoA detection may be used.

Similarly, such routers and access points conventionally include a ToF functionality. In ToF, a first device transmits a message to a second device, wherein the message includes a timestamp, such as the time the message was sent. The second device records the time that the message was received and determines the difference between the sending time and receipt time as the ToF. Because radio transmissions travel at the speed of light, the ToF can be used to determine/approximate a distance between the transmitting antenna and the receiving antenna as:

$$d = c * ToF \qquad\qquad (1)$$

wherein *d* is the distance between the transmitting antenna and the receiving antenna, c is the speed of light (e.g. 299,792,458 m/s), and *ToF* is the determined time-of-flight.

In determining an AoA and a ToF, the central device may estimate a position of the peripheral relative to the device performing the ToF and AoA (generally the router or AP). If the central device is aware of its position relative to device performing the ToF and AoA, then the central device may generate a map of the peripheral device relative to the central device.

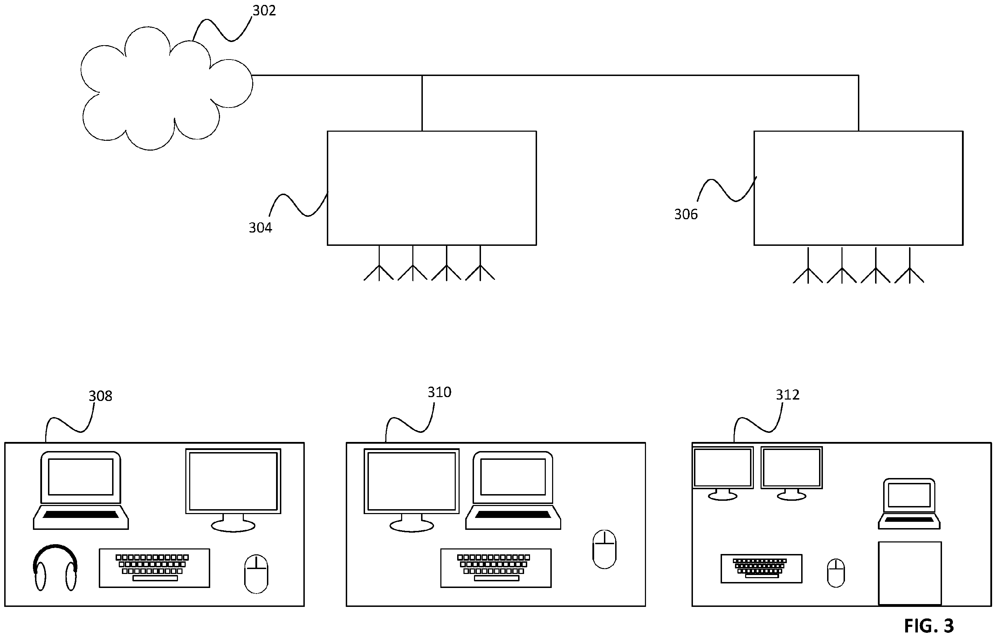

FIG. 3 depicts a topographic map of peripheral position identification. In this figure a communication backend 302 (e.g. a network, an internet service provider) is in communication with a first wireless access point (e.g. an edge router, a Wi-Fi station, a Bluetooth AP) 304 and a second wireless access point (e.g. an edge router, a Wi-Fi station, a Bluetooth AP) 306. A first logical group of devices 308, a second logical group of devices 310, and a third logical group of devices 312 are depicted. Illustratively, the first logical group of devices 308 may correspond to devices at a digital desk; the second logical group of devices 310 may correspond to a home environment; and the third logical group of devices 312 may correspond to a working environment. In this case, the first logical group 308 includes a central device, a monitor, headphones, a keyboard, and a mouse. The second logical group 310 includes a central device, a display, a keyboard, and a mouse. The third logical group 312 includes a central device, a docking device, two monitors, a keyboard, a mouse, and headphones. Each logical group includes a central device. Each central device is assigned at least one peripheral device as per the last established usage (for example, the central device in the first logical group 308 is assigned to four peripheral devices).

A logical group may be identified and named. That is, once a group is identified, such as by the Bluetooth Device Address, it may be named, such as based on the name of the central device. For example, the name of the first logical group may be: **"<CENTRAL DEVICE1 Name>:<MAC of Central>".**

Once each group is identified, the peripheral device of each group may be tracked. This may be achieved by using the device manager. Once the connection with the central device is established, the central device may prepare a map of its connected devices.

Each peripheral device may implement a beaconing protocol for the router, such as when the device is moved. Also, peripheral devices may transmit according to this beaconing protocol when they are connected to the central device in any way. Such beacons identify device types and connection status to the central device, as well as the position of these devices compared to the central device.

An example of a possible beacon by a peripheral device is as follows:

*Table 1*

| Group Identification | Peripheral Identification | | Active Beacon Content to Router (Encrypted traffic to the router) |
|---|---|---|---|
| | Peripher at COD | Peripheral_ Name: Peripheral_ MAC | |
| <CD1>:< MAC1 of Central> | 962:Mous e | Logitech MX3: <MAC2> | <CD 1>:<M1>, <962:Mouse>, <Logitech\MX3:MAC2><Connection Status: Connected> |
| | 961:Keyb oard | Logitech MX Keys: <MAC3> | <CD1>:<M1>,<961:KB>,<Logitech\MX3:MAC 3><Connection Status: Connected> |
| | 2654: earbuds | Sony XM4 Keys: <MAC4> | <CD1>:<M1>, <2654:Buds>,<SONY\XM4:MAC4><Connection Status: Disconnected> |
| | 6576: Headset | Jabra Elite: <MAC5> | <CD1>:<M1>,<6576:Headset>,<Jabra\Elite:MAC5><Connection Status: Connected> |
| | 8989: Wired Display | Lenovo 27": <MAC6> | <CD1>:<M1>,<8989:WiredDisp>,<Lenovo\27: MAC6><Connection Status: Connected> |
| | 9898: Wired Headset | Plantronics USB: <MAC7> | <CD1>:<M1>, <9898:WiredHS>,<PLT\USB:MAC7><Connection Status: Disconnected> |
| | ... | ... | ... |

In these beacons, the peripheral device transmits a type (e.g. 962:mouse, 961:KB), a manufacturer and an identifier (MX3, XM4), a MAC number, and a connection status. Although fewer or more individual tags or information elements may be conceivable, the bean should include identifying information about the peripheral and a connection status.

Beacons may be identified by the Router, as depicted in FIG. 3. That is, the peripherals may transmit beacons (e.g., as in the table above). The beacon will be received by the edge router (e.g. the AP). The edge router may identify the presence of a central device, if any. If a central device is present in a vicinity of the edge router, the edge router may send the relative positions of the peripherals to the central device, such as over the Bluetooth Link. The central device's high level operating system (HLOS) layer(s) may route the media accordingly and provide a visual confirmation (e.g. generate a map) based on the position.

If the central device is currently connected to one or more peripheral devices, and if it is also desired for the central device to connect to one or more additional devices, then an additional step may be performed. For example, the central device may be connected to four peripheral devices, but not yet connected to two peripheral devices in the peripheral group. In such circumstances, the following table describes the relevant communications among the central device and the peripheral devices.

*Table 2*

| Broadcast ed by? | Broadcasted when? | Active beacon content to router (encrypted traffic to the router) |
|---|---|---|
| Central device | Periodically (e.g., every 100s) if connected, or when the peripheral device detects movement) | <CD1>:<M1>,<962:Mouse>,<Logitech\MX3:MAC><Con nection status: Connected>,<961:KB>,<Logitech\Keys:MAC3><Connect ion Status: Connected>,<6576:Headset>,<Jabra\Elite:MAC5><Conne ction Status: Connected>,<8989:WiredDisp>,<Lenovo\27":MAC6><C onnection Status: Connected> |
| Connecte d Per- ipheral Devices | 962:Mouse - Periodi- cally until disconnection | <CD1>:<M1>,<962:Mouse>,<Logitech\MX3:MAC><Con nection status: Connected> |
| | 961:KB - Periodically until disconnection | <CD1>:<M1>,<Logitech\Keys:MAC3><Connection Status: Con- nected> |
| | 6576:Headset Periodi- cally until disconnection | <CD1>:<M1>,<6576:Headset>,<Jabra\Elite:MACS><Con nection Status: Connected> |
| | 8989:WiredD isp - Peri- odically until disconnec- tion | <CD1>:<M1>,<8989:WiredDisp>,<Lenovo\27":MAC6>< Connection Status: Connected> |
| Disconne ct Peripheral Device | Only when peripheral sensor detects movement | <CD1>:<M1>,<9898:WiredHS>,<PLT\USB:MAC7><Co nnection Status: Disconnected> |
| | Only when peripheral sensor detects movement | <CD1>:<M1>,<2654:Buds>,<SONY\XM4:MAC4><Conn ection Status: Disconnected> |

The above table depicts various strings a broadcasted by the peripherals and the central. This provides a mechanism for all the devices to be in 3D space, whether they are connected or not. That is, the peripherals may be configured to send a periodic beacon, in which the peripheral device broadcasts its type or class, and its name. The periodicity of this transmission is flexible and may be set based on the given implementation. More frequent transmissions may theoretically result in more accurate position detections (e.g. assuming, for example, movement of the peripheral device that does not otherwise trigger a new beacon, such as when the peripheral device lacks a movement sensor, see below), but more frequent beacon transmissions may also represent a strain on the peripheral device's limited battery resources. In the table above, the peripheral devices are set to transmit a beacon every 100 seconds, although any other duration would be conceivable.

In the above example (see table), the central is connected to four of six peripheral devices. A protocol for beaconing is utilized, in which device identifiers are used as shown in the table. Of note, the beacons transmitted by the various peripheral devices include not only a numerical identifier, but also a class (e.g. "Headset", "WiredDisp", etc.) and a name (e.g., "Jabra", "Lenovo", etc.). Such identifiers may be desirable since, absent such identifiers, the central would be able to indicate the relative location of a peripheral (e.g. using the procedures described herein), but it would not necessarily be able to indicate which peripheral is in that location. It obviously improves the user experience to know, for example, that the misplaced headset that the user is seeking is located on a nearby desk, rather than that a generic peripheral device is located at that desk.

The above transmissions may be received by the router/AP, which may use exiting AoA and ToF protocols to determine a location of the peripheral relative to the router/AP. The central device's location is, however, also known to the router/AP, such as by using the same AoA and ToF techniques in its transmission with the central device. In this manner, the router/AP is aware of the positions of the various peripherals relative and the central device, relative to the router/AP. The router/AP can then provide this position information to the central device, so that the central device may generate a map of the peripherals relative to the central device. In one configuration, the router/AP may be configured to simply transmit to the central device the locations of the central device and the peripherals relative to the router/AP, and then the central device will use this information to determine the locations of the peripherals relative to the central device. In another configuration, the router/AP may be configured to use the position information of the peripherals and the central device relative to the router/AP to determine the positions of the peripherals relative to the central device and then to transmit this information to the central device, for the central device's generation of a map.

This also permits the central device (e.g. via detection by the router/AP) to detect live movement of the peripheral devices. That is, many peripheral devices may be equipped with movement sensors, such as a gyroscope, an accelerometer, or any other type of sensor that may generate an electric impulse in response to movement. When such a movement sensor generates an electrical output that corresponds to movement, the peripheral device may be configured to transmit according to the table above. In this manner, the router/AP may detect when a peripheral device moves.

The central device may be configured to generate a map of the peripheral devices based on the information received from the router/AP. This may be a function of the central device's operating system or a function of a higher-level application. In an optional configuration, the locations of the peripheral device and/or any live movement of the peripheral devices may be viewed in the central device's setting application, such as where the central device would otherwise permit a user to select a peripheral for connection.

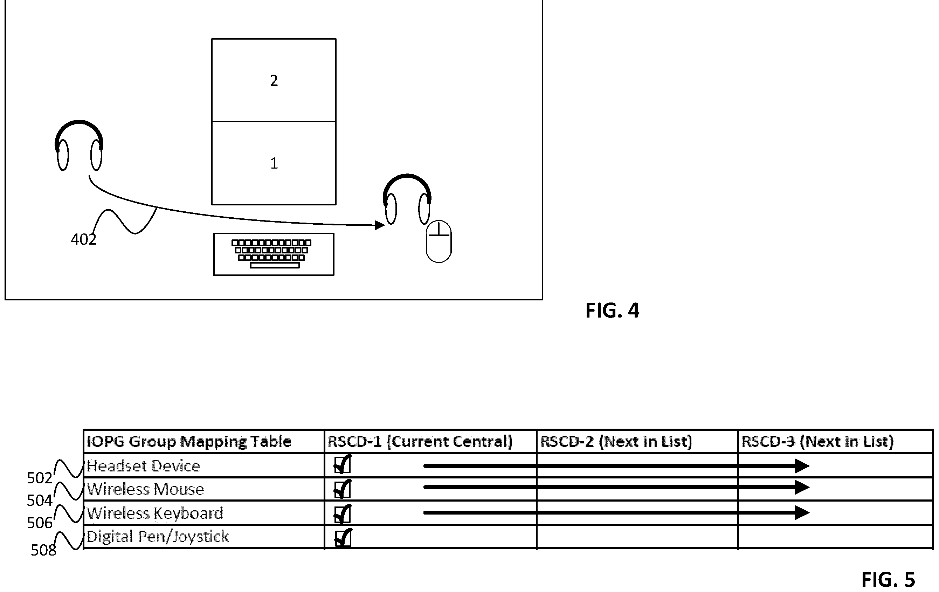

FIG. 4 depicts an exemplary map of live movement, as displayed by the central device. In this figure, the central device is connected to two monitors, a wireless keyboard, a mouse, and a headset. The headset is moved from the left side of the desk to the right side of the desk as depicted by 402. The central device may be configured to depict this movement in its peripheral map. Such movement may simply be that the headset disappears from its previous location and appears at its new location, such as when a beacon of the headset suddenly corresponds to a new location. On the other hand, if the headset includes a movement sensor, it may be configured to send a new beacon when movement is detected. This may result in multiple beacons during the transition from its previous location to its new location. Each beacon may result in a new position detection by the router/AP, and the router/AP may then transmit the new location to the central device. In this manner, the router/AP may provide location details to the central device such that the central device may update the map of the peripherals multiple times during the headset's movement from the previous position to its new position, thereby generating a kind of animation of the headset rather than simply ceasing to depict the headset in its previous location and suddenly depicting the headset in its new location.

This may have particular utility for peripheral devices whose orientation may be relevant for the central device. A clear example would be a wireless display. Should a user use multiple displays, it is necessary for the central device to know the displays' orientation so that information may be shown correctly on the displays (e.g. information for a topmost display is shown on the top, rather than on the bottom).

As disclosed above, the peripheral devices may be configured to transmit periodic beacons, which may include self-identifying information with respect to the peripheral device. That is, the peripheral device may transmit in its beacon a type of the peripheral device (e.g. a mouse, a keyboard, a display, etc.), and identifier of the peripheral device (e.g. a numerical identifier related to the specific make, manufacturer, and/or model), and a name of the peripheral device. In receiving such a beacon, the router/AP may utilize any known techniques (including but not limited to ToF and AoA) to determine an orientation of the peripheral device relative to the router/AP (e.g. an angle in three-dimensional space of the peripheral device relative to the router/AP, a vector angle of the peripheral relative to the AP) and a distance of the device relative to the AP. Because this may be derived from a beacon transmission which itself contains information about the peripheral device, the router/AP may link the derived position data of the peripheral device to the information about the peripheral device transmitted in the beacon (e.g. type, identifier, name, etc.).

The beacon may then transmit this information (position information and identification information from the beacon) to the central device. The central device may then store this information, such as in a file or table. This information may be processed and stored directly by the operating system of the central device. Additionally or alternatively, the central device may run an application (e.g. on top of the operating system) to process and store this information.

The central device (whether through the operating system or the application) may then be configured to generate a map of the peripheral device relative to the central device. Of course, this requires that the router/AP also transmit information to the central device about the position of the central device relative to the router/AP, or in an alternative configuration, the router/AP may determine positional information of the one or more peripheral devices relative to the central device, and to transmit this information. The map may depict positions or locations of the peripheral devices in three-dimensional space relative to the central device.

The central device may be configured to generate live updates of the map, such that movements of the peripheral devices are reflected in real time or close to real time. Such movement naturally requires repeated beacon transmissions of the peripheral devices to the router/AP. This may be performed by, for example, increasing the frequency of the beacon transmissions, such as when an accelerometer detects movement of the peripheral device.

In an optional configuration, the central device may be configured to instruct the peripheral device to generate a notification that is perceivable to one of the human senses. In this manner, the central device may cause a peripheral device to emit an auditory signal (e.g. ring my phone), vibrate, or emit a visual signal (e.g. a flash, a light, etc.).

In the following, attention is now turned to the issue of how to switch peripheral devices from a first central device to a second central device.

Turning to the issue of prompting handover of a group of peripherals from a first central device to a second central device, such handover may first require that peripherals be grouped. Such groups will be referred to herein as an Input/Output Peripheral Group (IOPG) (or simply as a "peripheral group", or just a "group"). An IOPG may be understood as a group of Peripheral devices that are linked (e.g. wirelessly connected) to a central device, or that are commonly concurrently linked to a central device. For example, in a modern workstation, a central device (e.g. a laptop) may be commonly linked to a keyboard, a mouse, a digital pen, and an audio headset.

This IOPG may be connected to a Resource Sharing Central Device (RSCD) (or simply a "central device", or just a "central"). Such an RSCD or central device may be a desktop computer, a laptop computer, a tablet computer, or any other device to which a plurality of peripheral devices may be wirelessly connected. A central device may be configured to share common resources among connected peripheral devices.

In a dynamically changing work and home setup, many wireless devices must be connected to a central device, often by users, and often manually. Depending on the nature of the work, it may be necessary to share usage and services of these peripheral devices among multiple central devices, often several times a day. That is, a user may need to connect a keyboard, mouse, digital pen, and headset to a first central device, and then connect these same peripherals to a second central device, and so on.

Generally, the peripheral switching concept disclosed herein may be implemented using Bluetooth low energy-based IOPGs and central device groups RSCDs. FIG. 5 depicts a mapping of peripheral devices into a peripheral device group IOPG for switching of the peripheral device group IOPG from a first central device group RSCD-1 to a second central device group RSCD-2 and finally to a third central device group RSCD-3. In this figure, four peripheral devices (a headset device 502, a wireless mouse 504, a wireless keyboard 506, and a digital pen/joystick 508) are all grouped as a peripheral device group IOPG, and this peripheral device group is connected to the first central device group RSCD-1 (e.g. as indicated by the checked boxes). Using a trigger (described below, but generally a gesture or other predefined action), a user may cause the peripherals in this peripheral device group IOPG to be connected to the second central device group RSCD-2.

An operating system service may be utilized in the background, so as to facilitate the transfers. This may also be implemented with an additional application in the foreground on the RSCDs so that the underlying service and concept may be integrated into a single place on each of the central devices, such that the IOPGs can be managed on the fly (e.g. not according to a predetermined schedule, in real-time). Gestures may be predefined, such that the user can trigger a transfer of peripheral devices within a group to a different central device by performing a predefined gesture, such as a predefined gesture with a mouse. A fast pairing / quick setup may optionally be performed by using a Hall sensor (e.g. a Hall effect sensor, such as a sensor to determine whether a laptop is open or closed) on a central device.

After the initial Configuration is complete (see generally FIG. 5), the compatible RSCDs (e.g. those RSCDs that support the feature disclosed herein) and the compatible IOPGs (e.g. the IOPGs supporting the feature disclosed herein) are mapped. In this manner, attempts to automatically transfer peripheral devices to another central device are precluded for peripheral devices that would not otherwise support this feature. The application may update the mapping inside the peripheral's memory. For example, once the initial connection is complete (for example, and turning to FIG. 5, this table indicates that four peripheral devices are initially connected to RSCD-1). At this point, the IOPGs (e.g. the IOPG group) are able to be moved from RSCD-1 to another RSCD (e.g., RSCD-2 or RSCD-3). This may be achieved by using the handover trigger as described in greater detail herein.

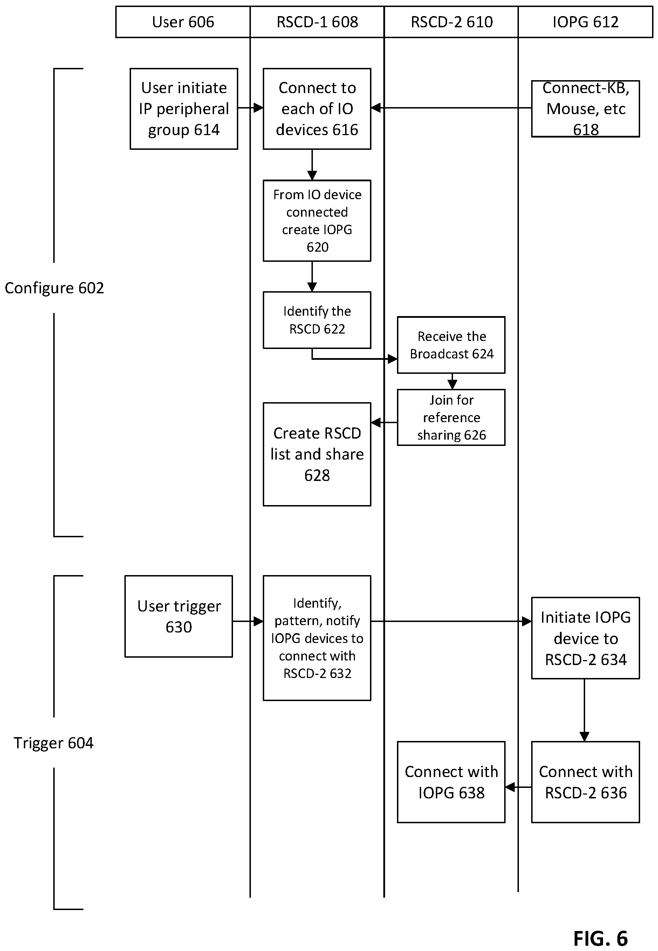

FIG. 6 depicts the configuration 602 and trigger 604 of a peripheral device handover. That is, steps 614 through 628 depict the configuration 602 of peripheral devices into device groups and generation and sharing of an RSCD device list. Steps 630 through 638 depicts the trigger stage 604, which includes a trigger action and the handover of peripheral devices from a central device to another center device based on a trigger action.

In the configuration stage 602, a software service (e.g. a low energy / Bluetooth Low Energy software service) is being operated in the RSCDs, which allows the RSCDs to generate a configuration map, such as the configuration map in Table 1, above. Mutual pairing and synchronization of the Compatible RSCD and Compatible IOPGs are also established, as in the configure 602 portion of FIG. 6, which depicts communication between the user 606, a first RSCD (RSCD-1) 608, a second RSCD (RSCD-2) 610 and an IOPG 612. The user 606 may initiate a peripheral group 614, which may be achieved by selecting one or more peripherals (e.g. connected peripherals, peripherals in proximity to the central device, peripherals within a list of peripherals that had previously been connected to the central device, etc.) for inclusion in a peripheral group. The RSCD-1 608 connects to each of the selected peripheral devices 616 with the group in step 614. Each of these peripheral devices as selected by the user may send a connection message to RSCD-1 608 as shown in 618. RSCD-1 then establishes these connected devices (e.g. these devices selected by the user) as the group.

In the trigger stage 604, the software service (e.g. the low energy software service, the Bluetooth low energy software service) receives a trigger 630, which is issued from the user 606. As will be described in greater detail herein, the trigger may be a predefined gesture (e.g. a predefined mouse movement), a sensor action (e.g. activation of a Hall sensor as will be described in greater detail herein), or a direct user-generated command from an application.

Upon receiving the trigger, RSCD-1 608 may identify the trigger pattern (e.g. identify a mouse movement associated with a trigger action within a greater series of mouse movements) and will notify the IOPG devices to connect to RSCD-2 (step 632). The respective peripheral devices will initiate a connection to RSCD-2, as shown in step 634. The respective peripheral devices will connect with RSCD-2 as shown in step 636, and the RSCD-2 will connect with the peripheral devices of the IOPG, as shown in step 638. The IOPG devices will naturally be disconnected from RSCD-1 (not depicted).

The nature of a trigger action should be broadly understood, as the trigger action can be uniquely defined by a user or for a particular implementation. In many instances, a reasonable trigger action may be largely dependent on the particular peripheral devices that are connected as part of the IOPG. That is, an IOPG consisting of only monitors may not have a gesture-type trigger action, since, absent a touch-screen, there is little, meaningful user-input via a monitor. In such cases, a trigger action may be best initiated via an application, such as an application that is operating on the central device (e.g. RSCD-1, or even RSCD-2, if so configured as to accept a trigger action from another central device). Other peripheral devices, however, lend themselves more easily to gesture-type trigger actions. For example, predefined actions can easily be conceived of and defined for a computer mouse, a digital pen, a touch-screen, or other such peripherals that otherwise service as an interface for user input. Headsets may provide audio data that may itself be or correspond to a trigger. Devices with gyroscopes or accelerometers may be used to generate a trigger by moving the device in certain predefined configurations (e.g. in such cases, this movement is the trigger action). In short, the trigger action should be understood broadly, and it is expressly recognized that the trigger action may be implementation-specific.

Nevertheless, certain trigger actions are likely to be widely implementation, such as in common peripheral configurations, and therefore these will now be addressed herein.

First, a trigger action may be a predetermined number of circular revolutions of a mouse, such as three circular revolutions. With commons operating systems and applications, there is little to no utility for repeated circular movements of the mouse, and therefore such an action may be reserved for an intent to change RSCD.

In a further configuration, directionality can be introduced to this movement. In this manner, for example, three clockwise circles of the mouse may indicate an instruction to transfer the peripheral group to a subsequent RSCD on the RSCD list. Conversely, counter-clockwise circles of the mouse may indicate an instruction to transfer the peripheral group to a previous RSCD on the RSCD list. Illustratively, a peripheral group connected to RSCD-2 may be transferred to RSCD-3 based on a mouse movement of three clockwise circles, or to RSCD-1 based on a mouse movement of three counter-clockwise circles. Obviously, the number of circles need not be 3, but could be a number greater than 3 or less than 3. The trigger action is not limited to circles, but could be any shape or polygon, or otherwise. Such patterns are also not limited to the mouse, but could also be implemented with any peripheral that is designed to transmit a representation of a user-induced motion to the central device. For example, digital pens, pointers, trackpads, or the like may be prime candidates.

Other exemplary trigger action configurations include the following:

*Table 3*

| 1 | Device 1 transfer from Central 1 to Central 2 | At least 1.5 clockwise circles of the mouse within 1 second |
| 2 | Device 2 transfer from Central 1 to Central 2 | At least 2.5 clockwise circles of the mouse within 2.5 seconds |
| 3 | Device 3 transfer from Central 1 to Central 2 | At least 3.5 clockwise circles of the mouse within 3 seconds. |
| 4 | Device1 transfer from Central 2 to Central 1 | At least 1.5 clockwise circles of the mouse within 1 second |
| 5 | Device 2 transfer from Central 2 to Central 1 | At least 2.5 clockwise circles of the mouse within 2.5 seconds |
| 6 | Device 3 transfer from Central 2 to Central 1 | At least 3.5 clockwise circles of the mouse within 3 seconds. |

In this alternative configuration, and with respect to steps 1-3, the user is able to select a peripheral device for transfer to a new central device based on the particular trigger action utilized. In this way, multiple trigger actions can be configured, such that each trigger action of the multiple trigger actions corresponds to a transfer instruction for a particular peripheral device. For example, in line 1, 1.5 clockwise circles is understood as an instruction to transfer device 1 from Central 1 to Central 2. A repeat of the 1.5 clockwise circles (see line 4) is then understood as an instruction to transfer device 1 from Central 2 to Central 1.

In an optional, additional configuration, the trigger action in the form of a gesture may be evaluated against x-y-boundaries of a display connected to the current central. In this manner, the mouse or other input device may be used to generate the trigger-action (gesture) in dimensions that would be greater than the current display size (e.g. mouse circles too big to be displayed on the current screen). By so steering the gesture into non-usable display space, further certainty can be achieved that the gesture is intended as a trigger action. That is, directing the gesture to non-usable display space reduces the likelihood of a false positive detection.

Additionally or alternatively, a sensor of a central device may be used to create a trigger action. That is, the user may perform one or more actions relative to a sensor of a central device to which the peripheral device group (IOPG) should be transferred. Although a wide variety of such actions is conceivable, one such promising action involves taking advantage of the Hall sensor on the central device to which the IOPG should be transferred.

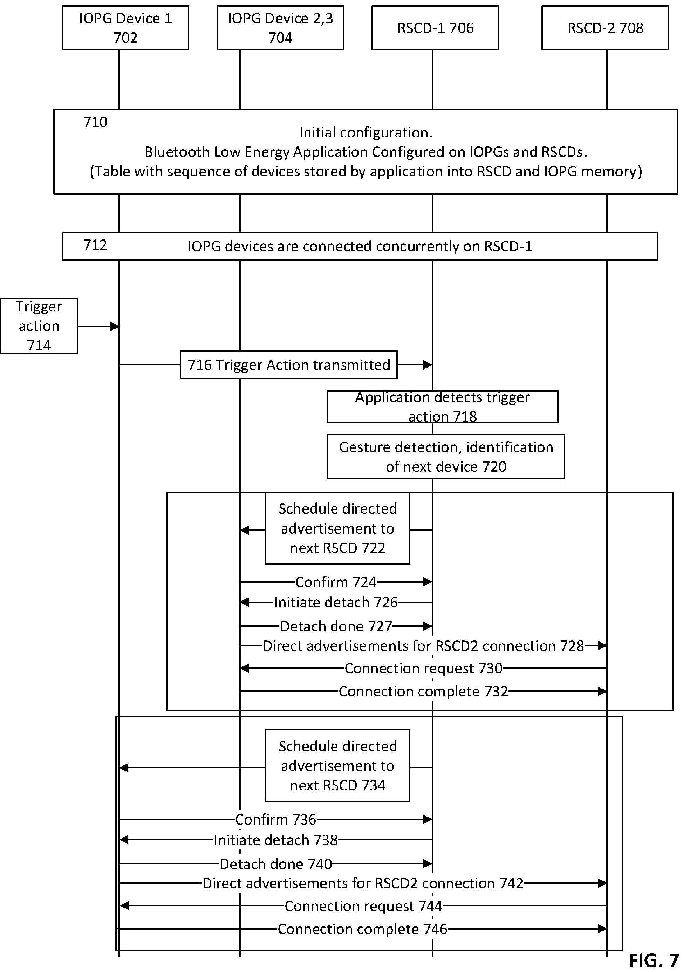

FIG. 7 depicts a process for transferring a peripheral device group IOPG (including IOPG device 1 702 and IOPG devices 2, 3 ... n 704) from a first central device RSCD-1 706 to a second central device RSCD-2 708. An initial configuration 710 is performed, in which an application (e.g. a Bluetooth low energy application) that is configured on each IOPG and RSCD creates a table with a sequence of devices as described above. This table may be stored in the memory of any or each RSCD and in any or each peripheral device of the IOPG. Each IOPG device of the IOPG (e.g. each peripheral device in the group, including 702 and 704) is connected concurrently to the first central device RSCD-1 (see 712 for this step). At some point, the user initiates a trigger action 714, which is an indication for the peripheral devices of the IOPG to be transferred from RSCD-1 to another central device, such as, for example, RSCD-2. As stated herein, although a variety of trigger actions are conceivable, an exemplary trigger action may be three clockwise, circular movements of a mouse. This trigger action is then transmitted to the connected RSCD (e.g. RSCD-1) 716, which detects the trigger action within the sensor data/peripheral data received from the relevant peripheral device 718. For example, RSCD-1 may detect the three circular movements of the mouse from the mouse data received from the mouse. Based on this detection, the central device (e.g., RSCD-1) may determine to which central device to transfer the IOPG should be transferred.

Once the next central device for the transfer is determined, the current central device (RSCD-1 706) may prompt the peripheral devices to transfer themselves to the next central device (e.g., RSCD-2 708). This is achieved by instructing each peripheral device to send a directed advertisement to the next RSCD (e.g., RSCD-2) and then to initiate a detachment procedure from the current RSCD (e.g., RSCD-1 706). The peripheral then advertises to the next RSCD and subsequently connects to the next RSCD. This process is reflected in the two boxes and is achieved as follows. The current RSCD 706 instructs the IOPG peripheral device 704 to advertise to the next RSCD 722. The IOPG 704 sends a confirmation 724 to the RSCD 706. The RSCD 706 initiates a detachment 726 between the IOPG 704 and the RSCD 706. Once the detachment is complete 727, the IOPG 704 advertises 728 to the next RSCD 708. The RSCD 708 sends a connection request 732 the IOPG 704, and the IOPG 704 sends a confirmation to the RSCD 708 that the connection is complete 732.

Similarly, and with respect to the first IOPG peripheral device 702, the RSCD 706 instructs 734 the first IOPG 702 to advertise to the next RSCD 708. The first IOPG 702 sends a confirmation 736 to the RSCD 706. The RSCD 706 then initiates a detachment 738 of the IOPG 702 from the RSCD 706. The IOPG 702 sends a confirmation to the RSCD 706 that the detachment is complete 740. The first IOPG 702 advertises 742 to the next RSCD 708. The next RSCD 708 sends a connection request 744 to the first IOPG 702. The first IOPG 702 sends a confirmation that the connection is complete 746 to the RSCD 708.

The above may be generally summarized in a series of four steps as follows:

Step 1: The user initiates a trigger action (e.g. a predefined mouse action, a Hall Sensor tap, etc.).

Step 2: sensor information or peripheral information representing the trigger action is sent to the RSCD (for this example, RSCD-1), where the trigger action is recognized and processed. In an exemplary configuration, this process may be performed within a Bluetooth low energy service as part of the RSCD.

Step 3: RSCD-1 starts the detachment procedure and instructs IOPG-1 to initiate a directed advertisement to RSCD-2. This is repeated for each IOPG (e.g. IOPG-2, IOPG-3, ... IOPG-n).

Step 4: RSCD-2 receives the directed advertisement from IOPG-1 and initiates a connection. This is repeated for each IOPG (e.g. IOPG-2, IOPG-3, ... IOPG-n).

A Hall sensor (also called a Hall effect sensor) is a sensor that is used to detect a potential difference across an electrical conductor that is transverse to a magnetic field. Hall sensors are widely used in a laptop computers to detect whether the laptop (e.g. the display of the laptop) is open or closed. Although various configurations are known, a typical configuration is that a Hall sensor is placed in the body of a laptop (e.g. in the base, near the keyboard) and a magnet is placed in a corresponding area of the lid (e.g. housing for the display). When the screen is closed, the magnet moves toward the Hall sensor, which then detects the magnetic field created by the presence of the magnet. In this manner, the Hall sensor detects whether the lid is closed.

In common practice, the Hall sensor is used in conjunction with an accelerometer and/or gyroscope, which can be used to determine whether the laptop lid has in fact moved. This may serve as a double check for the Hall sensor, so that a positive Hall sensor detection (e.g. detection of a magnetic field) is verified by accelerometer data. In essence, if both the Hall sensor detects a magnetic field and the accelerometer and/or gyroscope indicates movement of the lid, then this is a reasonable basis to conclude that the lid has been closed.

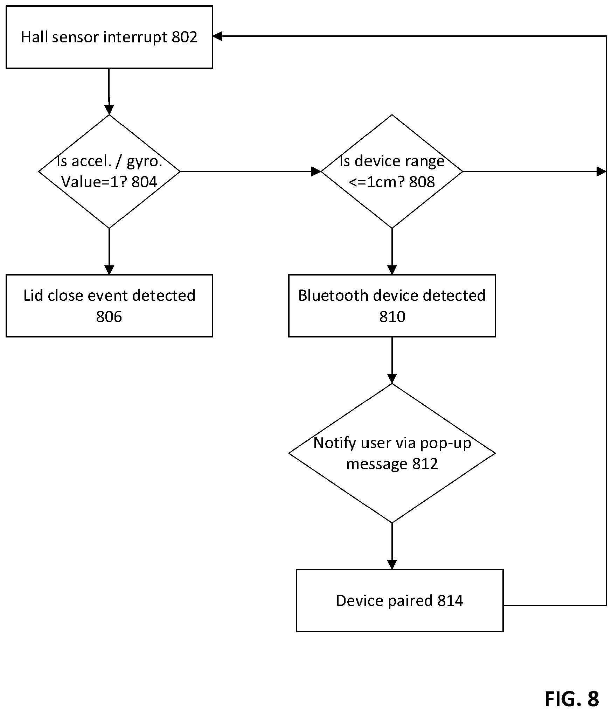

FIG. 8 depicts a flow diagram for the use of a Hall sensor as a trigger action. The procedure begins with a Hall sensor interrupt 802, which corresponds to the placement of a magnet within close proximity of the hall sensor. Although this regularly happens when a lid of a laptop is closed, this may also be achieved by a user placing a magnet within close proximity of the hall sensor. Many Bluetooth-enabled devices include a magnet, and therefore placing such a Bluetooth-enabled device in close proximity to the lid of a laptop may generate a Hall sensor interrupt. For example, tapping or holding a Bluetooth-enabled mouse containing a magnet against the lid of a laptop that is configured as an RSCD may be understood as a trigger action indicating an intention for the IOPG to be transferred from a currently-connected RSCD to an RSCD corresponding to the device that has been tapped.

Once the hall sensor interrupt 802 is detected, a processor (e.g. a processor on the RSCD on which the hall sensor interrupt 802 was registered) determines whether an accelerometer value or a gyrometer value is "1" 804. This step (and particularly the nomenclature about whether the value is "=1" may generally be understood as a shorthand for determining whether the accelerometer or gyrometer has detected movement. As stated above, Hall sensors (such as on laptop lid's) are often accompanied by an accelerometer or gyrometer that is configured to indicate movement of the laptop lid. In this case, "=1" is intended to indicate that movement of the laptop lid has been detected. Conversely, if no movement of the laptop lid has been detected, then the accelerometer or gyrometer data would be expected to be "=0".

If the hall sensor interrupt 802 is detected and the accelerometer or gyrometer value is "=1" 804, then this corresponds with a lid close event 806, and no action need be taken with respect to a transfer of the RSCD. If, however, a Hall sensor interrupt 802 is detected and no movement is detected by the accelerometer or gyrometer (e.g. the accelerometer/gyrometer is "=0"), then it is next determined whether a Bluetooth device is in close proximity to the RSCD at which the hall sensor interrupt was originated (e.g. a determination of whether the Bluetooth device range is "<=1cm" 808). Obviously, other ranges greater than or less than 1 cm may be selected, and the range of 1 cm is provided here strictly for demonstrative purposes. If a Hall sensor interrupt is detected 802, the accelerometer/gyrometer value is "=0" 804 and the device range is less than or equal to 1 cm (or another predetermined value) 808, then a Bluetooth device is detected 810 and it is assumed that the user has initiated a trigger action by tapping the Bluetooth device against the RSCD to which the peripheral group should be transferred. The user of the transfer in a pop up message 812, and the peripheral group is then paired with the new RSCD (on which the Bluetooth device was tapped) 814, such as via the procedures set forth in FIG. 7.

Here it is noted that the diagrams and explanations used herein typically assume that a transfer is performed from a first RSCD to another RSCD that is sequentially next within a listing of RSCDs (e.g. from RSCD-1 to RSCD-2, or from RSCD-2 to RSCD-3, etc.). In many implementations, this configuration may be suitable, as there may be only two RSCDs, and connections of the peripheral group may be essentially toggled between the first RSCD and the second RSCD. In other implementations, there may be more than two RSCDs, but it may be acceptable to rotate the peripheral groups through the RSCDs, such as: RSCD-1 to RSCD-2, then RSCD-2 to RSCD-3, then RSCD-3 to RSCD-4, and then RSCD-4 to RSCD-1. In other implementations, however, it may be desired or necessary to be able to select a specific RSCD for peripheral connection, even when that particular RSCD is not the next RSCD within the series of RSCDs. That is, it may be desired to jump from RSCD-1 directly to RSCD-3. For such circumstances, the current RSCD may include an application (e.g. a software program) which may permit such a transfer.

Such an application may be configured such that, when the user initiates a trigger action, the application prompts the user to then select an RSCD to which the peripheral devices in the peripheral device group (IOPG) should be transferred. Upon selecting the group, the application then processes the remainder of the transfer, in accordance with FIG. 7. Alternatively or additionally, the application may permit the user to specify the RSCD to who the IOPG should be transferred, with the application itself, thereby eliminating the need for a peripheral-originated trigger-action. Instead, in this circumstance, the trigger action in itself may be understood as the user-initiation of a transfer within the application.

An aim of the procedure disclosed in FIG. 8 is to distinguish between a user-initiated trigger action and an opening or closing of the lid. By following this procedure, the detection of the hall sensor interrupt, the lack of movement of the lead as detected by the accelerometer or gyrometer, and the very close proximity of the Bluetooth peripheral to the new RSCD (central device), when taken together, are a strong indication of a user-intention to perform a trigger action. The RSCD on which the hall sensor interrupt was generated may detect a distance to the Bluetooth-enabled peripheral device including a magnet through any known method. In one configuration, the RSCD may be configured to determine a received signal strength indicator (RSSI) of the peripheral, which may serve as a proxy for a distance between the peripheral device and the RSCD. Based on a value of the RSSI, the RSCD may derive an approximate a distance between the RSCD and the peripheral device. Alternatively or additionally, the RSCD may receive position information of both the RSCD and the peripheral device using the methods described above, such as from the router, or from the map generated by the current central device.

In one configuration, the procedures described herein with respect to the hall sensor-based trigger action may be implemented even where the RSCD on which the hall sensor interrupt occurs is in sleep or hibernation mode. The RSCD may be configured to wake up when the hall sensor interrupt is generated, such that it may perform the remainder of the steps disclosed above with respect to FIG. 8.

An application for handover may take advantage of the Bluetooth Generic ATTribute Profile (GATT profile), which generally defines how Bluetooth Low Energy devices transfer data between them. Generally, GATT specifies Services and Characteristics as part of this data transfer, while utilizing a generic data protocol called the Attribute Protocol (ATT). The ATT may store services and characteristics in a look up table. In this manner, the GATT profile may specify any of the services and/or characteristics of the configuration to enable the messaging between devices and/or handoff between devices as disclosed herein.

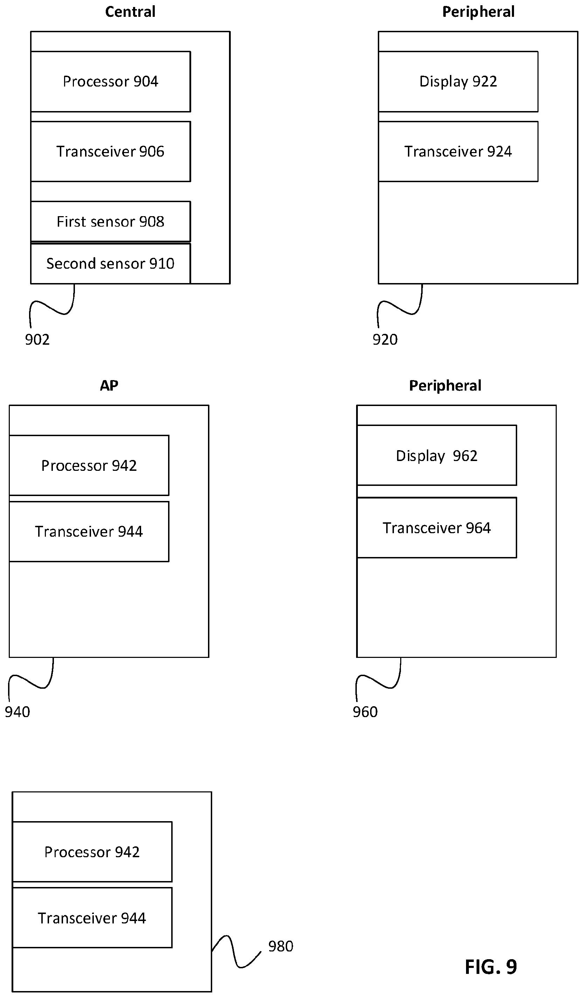

FIG. 9 depicts a system diagram that includes first device 902 (a central device) that includes a processor 904, which is configured to determine an identifier of a second device 920 based on a first wireless signal from the second device 920 (a peripheral device). The processor 904 may be further configured to determine a position of the second device 920 based on a second wireless signal from a third device 940 (a router/AP). The processor 904 may be further configured to generate a map of the second device 920 relative to the first device 902.

The first device 902 may further include a transceiver 906, which may be configured to receive the first wireless signal from the second device 920, wherein the first wireless signal represents an identifier of the second device 920. The transceiver may be further configured to receive the second wireless signal from the third device 940 (AP), wherein the third wireless signal represents a position of the second device 920. The processor 904 may be further configured to determine an identifier of a fourth device 960 (additional peripheral) based on a third wireless signal from the fourth device 960 and to determine a position of the fourth device 960 based on a fourth wireless signal from the third device 940 (AP). The processor 904 generating the map may further include the processor 904 generating a map of the second device 920 and the fourth device 960 relative to the first device 902.

In some configurations, the second device 920 and the fourth device 960 may include displays (see display 922 and display 962), and the first device 902 may be further configured to adjust a setting of the first device 902 for displaying an image on the second device 920 and an image on the fourth device 960 based on the position of the second device 920 and the position of the fourth device 960.

The second device 920 may be a peripheral device (e.g. a Bluetooth peripheral device), which may be connected to the first device 902. The third device 940 may be a wireless access point.

In some configurations, the received position of the second device 920 may include an absolute position of the second device 920. In other configurations, the received position of the second device 920 may include a position of the second device 920 relative to the first device 902.

The first device 902 may be configured to receive the first wireless signal according to a Bluetooth Low Energy protocol. The first device 902 may further be configured to receive the second wireless signal according to an Institute of Electronics and Electrical Engineers 802.11 protocol.

According to another aspect of the disclosure, the first device 902 may include a non-transitory computer readable medium, which may including instructions which, if executed, are configured to cause the processor 904 to generate a peripheral group, including a plurality of peripheral devices (e.g. the second device 920 and the fourth device 960) having a wireless link to a first computing device. In response to a predefined trigger action, the instructions may be configured to cause the processor 904 to cause the plurality of peripheral devices (920 and 960) to establish a wireless link to a fifth computing device 980. Causing the plurality of peripheral devices (920 and 960) to establish the wireless link to the fifth computing device 980 may include instructing the plurality of peripheral devices to advertise to the second computing device (980). Furthermore, causing the plurality of peripheral devices (920 and 960) to establish the wireless link to the fifth computing device 980 further includes initiating a disconnection of the plurality of peripheral devices from the first device.

Any of the devices described herein (the first device, the second device, the third device, etc.) may further include a memory. The device may be configured to store any information described herein on said memory. For example, the central device may be configured to store the generated map on the memory. The AP may be configured to store any determined position on the memory.

Further aspects of the disclosure will be described by way of Example:

In Example 1, a first device (central), including a processor, configured to determine an identifier of a second wireless device based on a first wireless signal from the second device (peripheral); determine a position of the second device based on a second wireless signal from a third device (AP); and generate a map of the second device relative to the first device.

In Example 2, the first device of Example 1, further including a transceiver, configured to: receive the first wireless signal from a second device (peripheral), wherein the first wireless signal represents an identifier of the second device; receive the second wireless signal from the third device (AP), wherein the third wireless signal represents a position of the second device.

In Example 3, the first device of Example 1 or 2, wherein the processor is further configured to: determine an identifier of a fourth device (additional peripheral) based on a third wireless signal from the fourth device; determine a position of the fourth device based on a fourth wireless signal from the third device (AP); and wherein the processor generating the map further includes the processor generating a map of the second device and the fourth device relative to the first device.

In Example 4, the first device of Example 3, wherein the second device and the fourth device include displays, and wherein the first device is further configured to adjust a setting of the first device for displaying an image on the second device and an image on the fourth device based on the position of the second device and the position of the fourth device.

In Example 5, the first device of any one of Examples 1 to 4, wherein the second device is peripheral device, connected to the first device.

In Example 6, the first device of any one of Examples 1 to 5, wherein the third device is a wireless access point.

In Example 7, the first device of any one of Examples 1 to 6, wherein the received position of the second device includes an absolute position of the second device.

In Example 8, the first device of any one of Examples 1 to 6, wherein the received position of the second device includes a position of the second device relative to the first device.

In Example 9, the first device of any one of Examples 1 to 8, wherein the first device is configured to receive the first wireless signal according to a Bluetooth Low Energy protocol.

In Example 10, the first device of any one of Examples 1 to 9, wherein the first device is configured to receive the second wireless signal according to an Institute of Electronics and Electrical Engineers 802.11 protocol.

In Example 11, the first device of any one of Examples 1 to 10, wherein the identifier includes an identifier of a type of peripheral corresponding to the second device.

In Example 12, the first device of any one of Examples 1 to 11, wherein the processor is further configured to cause the map to be displayed on a screen.

In Example 13, the first device of any one of Examples 1 to 12, wherein the processor is further configured to store the map in a memory.

In Example 14, a wireless access point, including a processor, configured to determine a position of a first device based on a first wireless signal from the first device (central); determine a position of a second device based on a second wireless signal from the second device (peripheral); and cause a transceiver to send a third wireless signal to the first device, wherein the third wireless signal represents a position of the second device.

In Example 15, the wireless access point of Example 14, further including: a transceiver, configured to: receive the first wireless signal from the first device; and receive the second wireless signal from the second device.

In Example 16, the wireless access point of Example 14 or 15, wherein the processor determining the position of the first device includes the processor determining the position of the first device based on an angle of arrival and a time of flight of the first wireless signal, and wherein determining the position of the second device includes determining the position of the second device based on an angle of arrival and a time of flight of the second wireless signal.

In Example 17, the wireless access point of Example 14 or 16, wherein the wireless access point is further configured to: determine a new position of the second device based on a fourth wireless signal received from the second device; and send a fifth wireless signal to the first device, wherein the fifth wireless signal represents an updated position of the second device relative to the first device.

In Example 18, the wireless access point of any one of Examples 14 to 17, wherein the third wireless signal represents a position of the second device relative to the first device.

In Example 19, a device including a processor, configured to: generate a peripheral group, including a plurality of peripheral devices having a wireless link to a first computing device; and in response to a predefined trigger action, cause the plurality of peripheral devices to establish a wireless link to a second computing device.

In Example 20, the device of Example 19, wherein causing the plurality of peripheral devices to establish a wireless link to the second computing device includes instructing the plurality of peripheral devices to advertise to the second computing device.

In Example 21, the device of Example 20, wherein causing the plurality of peripheral devices to establish a wireless link to the second computing device further includes initiating a disconnection of the plurality of peripheral devices from the first device.

In Example 22, the device of any one of Examples 19 to 21, wherein the trigger action is a predefined movement of a mouse peripheral.

In Example 23, the device of Example 22, wherein the predefined movement of the mouse peripheral includes completing a predefined number of revolutions around a circular path.

In Example 24, the device of any one of Examples 19 to 23, wherein the predefined trigger action is a first trigger action; and wherein the instructions are further configured, in response to a second trigger action, to cause the plurality of peripheral devices to establish a wireless link to a third computing device.

In Example 25, the device of any one of Examples 19 to 24, wherein the trigger action includes an instruction received from the second computing device to cause the plurality of peripheral devices to establish the wireless link to the second computing device.

In Example 26, a first computing device, including: a processor; and a transceiver; wherein the processor is configured, in response to a predefined trigger, to control the transceiver to send an instruction to a second computing device, to which a plurality of peripheral devices are connected, to cause the plurality of peripheral devices to establish a wireless link to a first computing device.

In Example 27, the first computing device of Example 26, wherein the first computing device further includes: a first sensor, configured to detect changes in a magnetic field; and a second sensor, configured to detect movement of a component of the first computing device; wherein the predefined trigger includes the first sensor generating sensor data representing a change in the magnetic field, and the second sensor generating sensor data representing no movement of the component.

In Example 28, the first computing device of Example 26 or 27, wherein the first sensor is a Hall Effect sensor.

In Example 29, the first computing device of any one of Examples 26 to 28, wherein the second sensor is an accelerometer.

In Example 30, a non-transitory computer readable medium, including instructions which, if executed by a processor, cause the processor to: determine an identifier of a second wireless device based on a first wireless signal from the second device (peripheral); determine a position of the second device based on a second wireless signal from a third device (AP); and generate a map of the second device relative to the first device.

In Example 31, the non-transitory computer readable medium of Example 30, wherein the instructions are further configured to cause the processor to: instruct a transceiver to receive the first wireless signal from a second device (peripheral), wherein the first wireless signal represents an identifier of the second device; and instruct the transceiver to receive the second wireless signal from the third device (AP), wherein the third wireless signal represents a position of the second device.

In Example 32, the non-transitory computer readable medium of Example 30 or 31, wherein the instructions are further configured to cause the processor to: determine an identifier of a fourth device (additional peripheral) based on a third wireless signal from the fourth device; determine a position of the fourth device based on a fourth wireless signal from the third device (AP); and wherein the processor generating the map further includes the processor generating a map of the second device and the fourth device relative to the first device.

In Example 33, the non-transitory computer readable medium of Example 32, wherein the second device and the fourth device include displays, and wherein the first device is further configured to adjust a setting of the first device for displaying an image on the second device and an image on the fourth device based on the position of the second device and the position of the fourth device.

In Example 34, the non-transitory computer readable medium of any one of Examples 30 to 33, wherein the second device is peripheral device, connected to the first device.

In Example 35, the non-transitory computer readable medium of any one of Examples 30 to 34, wherein the third device is a wireless access point.

In Example 36, the non-transitory computer readable medium of any one of Examples 30 to 35, wherein the received position of the second device includes an absolute position of the second device.

In Example 37, the non-transitory computer readable medium of any one of Examples 30 to 35, wherein the received position of the second device includes a position of the second device relative to the first device.

In Example 38, the non-transitory computer readable medium of any one of Examples 30 to 37, wherein the first device is configured to receive the first wireless signal according to a Bluetooth Low Energy protocol.

In Example 39, the non-transitory computer readable medium of any one of Examples 30 to 38, wherein the first device is configured to receive the second wireless signal according to an Institute of Electronics and Electrical Engineers 802.11 protocol.

In Example 40, the non-transitory computer readable medium of any one of Examples 30 to 39, wherein the identifier includes an identifier of a type of peripheral corresponding to the second device.

In Example 41, the non-transitory computer readable medium of any one of Examples 30 to 40, wherein the processor is further configured to cause the map to be displayed on a screen.

In Example 42, the non-transitory computer readable medium of any one of Examples 30 to 41, wherein the processor is further configured to store the map in a memory.

In Example 43, a non-transitory computer readable medium, including instructions that, when executed by a processor, cause the processor to: determine a position of a first device based on a first wireless signal from the first device (central); determine a position of a second device based on a second wireless signal from the second device (peripheral); and cause a transceiver to send a third wireless signal to the first device, wherein the third wireless signal represents a position of the second device.

In Example 44, the non-transitory computer readable medium of Example 43, wherein the instructions are further configured to cause the processor to: receive the first wireless signal from the first device; and receive the second wireless signal from the second device.

In Example 45, the non-transitory computer readable medium of Example 43 or 44, wherein the processor determining the position of the first device includes the processor determining the position of the first device based on an angle of arrival and a time of flight of the first wireless signal, and wherein determining the position of the second device includes determining the position of the second device based on an angle of arrival and a time of flight of the second wireless signal.

In Example 46, the non-transitory computer readable medium of Example 43 or 45, wherein the instructions are further configured to cause the processor to: determine a new position of the second device based on a fourth wireless signal received from the second device; and send a fifth wireless signal to the first device, wherein the fifth wireless signal represents an updated position of the second device relative to the first device.

In Example 47, the non-transitory computer readable medium of any one of Examples 43 to 46, wherein the third wireless signal represents a position of the second device relative to the first device.

In Example 48, a non-transitory computer readable medium, including instructions which, if executed, are configured to cause one or more processors to: generate a peripheral group, including a plurality of peripheral devices having a wireless link to a first computing device; and in response to a predefined trigger action, cause the plurality of peripheral devices to establish a wireless link to a second computing device.

In Example 49, the non-transitory computer readable medium of Example 48, wherein causing the plurality of peripheral devices to establish a wireless link to the second computing device includes instructing the plurality of peripheral devices to advertise to the second computing device.

In Example 50, the non-transitory computer readable medium of Example 49, wherein causing the plurality of peripheral devices to establish a wireless link to the second computing device further includes initiating a disconnection of the plurality of peripheral devices from the first device.

In Example 51, the non-transitory computer readable medium of any one of Examples 48 to 50, wherein the trigger action is a predefined movement of a mouse peripheral.

In Example 52, the non-transitory computer readable medium of Example 51, wherein the predefined movement of the mouse peripheral includes completing a predefined number of revolutions around a circular path.

In Example 53, the non-transitory computer readable medium of any one of Examples 48 to 52, wherein the predefined trigger action is a first trigger action; and wherein the instructions are further configured, in response to a second trigger action, to cause the plurality of peripheral devices to establish a wireless link to a third computing device.

In Example 54, the non-transitory computer readable medium of any one of Examples 48 to 53, wherein the trigger action includes an instruction received from the second computing device to cause the plurality of peripheral devices to establish the wireless link to the second computing device.

In Example 55, a non-transitory computer readable medium, including instructions which, if executed, are configured to cause a processor to: in response to a predefined trigger, control a transceiver to send an instruction to a second computing device, to which a plurality of peripheral devices are connected, and to cause the plurality of peripheral devices to establish a wireless link to a first computing device.

In Example 56, the non-transitory computer readable medium of Example 55, wherein the first computing device includes: a first sensor, configured to detect changes in a magnetic field; and a second sensor, configured to detect movement of a component of the first computing device; wherein the predefined trigger includes the first sensor generating sensor data representing a change in the magnetic field, and the second sensor generating sensor data representing no movement of the component.

In Example 57, the non-transitory computer readable medium of Example 55 or 56, wherein the first sensor is a Hall Effect sensor.

In Example 58, the non-transitory computer readable medium of any one of Examples 55 to 57, wherein the second sensor is an accelerometer.

In Example 59, a method including determining an identifier of a second wireless device based on a first wireless signal from the second device (peripheral); determining a position of the second device based on a second wireless signal from a third device (AP); and generating a map of the second device relative to the first device.

In Example 60, the method of Example 59, further including instructing a transceiver to receive the first wireless signal from a second device (peripheral), wherein the first wireless signal represents an identifier of the second device; and instructing the transceiver to receive the second wireless signal from the third device (AP), wherein the third wireless signal represents a position of the second device.

In Example 61, the method of Example 59 or 60, further including determining an identifier of a fourth device (additional peripheral) based on a third wireless signal from the fourth device; determining a position of the fourth device based on a fourth wireless signal from the third device (AP); and wherein the processor generating the map further includes generating a map of the second device and the fourth device relative to the first device.

In Example 62, the method of Example 61, wherein the second device and the fourth device include displays, and wherein the first device is further configured to adjust a setting of the first device for displaying an image on the second device and an image on the fourth device based on the position of the second device and the position of the fourth device.

In Example 63, the method of any one of Examples 59 to 62, wherein the second device is peripheral device, connected to the first device.

In Example 64, the method of any one of Examples 59 to 63, wherein the third device is a wireless access point.

In Example 65, the method of any one of Examples 59 to 64, wherein the received position of the second device includes an absolute position of the second device.

In Example 66, the method of any one of Examples 59 to 64, wherein the received position of the second device includes a position of the second device relative to the first device.

In Example 67, the method of any one of Examples 59 to 66, wherein the first device is configured to receive the first wireless signal according to a Bluetooth Low Energy protocol.

In Example 68, the method of any one of Examples 59 to 67, wherein the first device is configured to receive the second wireless signal according to an Institute of Electronics and Electrical Engineers 802.11 protocol.

In Example 69, the method of any one of Examples 59 to 68, wherein the identifier includes an identifier of a type of peripheral corresponding to the second device.

In Example 70, the method of any one of Examples 59 to 69, wherein the processor is further configured to cause the map to be displayed on a screen.

In Example 71, the method of any one of Examples 59 to 70, wherein the processor is further configured to store the map in a memory.

In Example 72, a method, including determining a position of a first device based on a first wireless signal from the first device (central); determining a position of a second device based on a second wireless signal from the second device (peripheral); and causing a transceiver to send a third wireless signal to the first device, wherein the third wireless signal represents a position of the second device.

In Example 73, the method of Example 72, further including receiving the first wireless signal from the first device; and receiving the second wireless signal from the second device.

In Example 74, the method of Example 72 or 73, wherein determining the position of the first device includes determining the position of the first device based on an angle of arrival and a time of flight of the first wireless signal, and wherein determining the position of the second device includes determining the position of the second device based on an angle of arrival and a time of flight of the second wireless signal.

In Example 75, the method of Example 72 or 74, further including: determining a new position of the second device based on a fourth wireless signal received from the second device; and sending a fifth wireless signal to the first device, wherein the fifth wireless signal represents an updated position of the second device relative to the first device.

In Example 76, the method of any one of Examples 72 to 75, wherein the third wireless signal represents a position of the second device relative to the first device.

In Example 77, a method, including: generating a peripheral group, including a plurality of peripheral devices having a wireless link to a first computing device; and in response to a predefined trigger action, causing the plurality of peripheral devices to establish a wireless link to a second computing device.

In Example 78, the method of Example 77, wherein causing the plurality of peripheral devices to establish a wireless link to the second computing device includes instructing the plurality of peripheral devices to advertise to the second computing device.

In Example 79, the method of Example 78, wherein causing the plurality of peripheral devices to establish a wireless link to the second computing device further includes initiating a disconnection of the plurality of peripheral devices from the first device.

In Example 80, the method of any one of Examples 77 to 79, wherein the trigger action is a predefined movement of a mouse peripheral.

In Example 81, the method of Example 80, wherein the predefined movement of the mouse peripheral includes completing a predefined number of revolutions around a circular path.

In Example 82, the method of any one of Examples 77 to 81, wherein the predefined trigger action is a first trigger action; and wherein the instructions are further configured, in response to a second trigger action, to cause the plurality of peripheral devices to establish a wireless link to a third computing device.

In Example 83, the method of any one of Examples 77 to 82, wherein the trigger action includes an instruction received from the second computing device to cause the plurality of peripheral devices to establish the wireless link to the second computing device.

In Example 84, a method, including: in response to a predefined trigger, controlling a transceiver to send an instruction to a second computing device, to which a plurality of peripheral devices are connected, and causing the plurality of peripheral devices to establish a wireless link to a first computing device.

In Example 85, the method of Example 84, wherein the first computing device includes: a first sensor, configured to detect changes in a magnetic field; and a second sensor, configured to detect movement of a component of the first computing device; wherein the predefined trigger includes the first sensor generating sensor data representing a change in the magnetic field, and the second sensor generating sensor data representing no movement of the component.

In Example 86, the method of Example 84 or 85, wherein the first sensor is a Hall Effect sensor.

In Example 87, the method of any one of Examples 84 to 86, wherein the second sensor is an accelerometer.

In Example 88, a first device (central), including: a processing means, for determining an identifier of a second wireless device based on a first wireless signal from the second device (peripheral); determining a position of the second device based on a second wireless signal from a third device (AP); and generating a map of the second device relative to the first device.

In Example 89, the first device of Example 88, further including a radio communication means for: receiving the first wireless signal from a second device (peripheral), wherein the first wireless signal represents an identifier of the second device; and receiving the second wireless signal from the third device (AP), wherein the third wireless signal represents a position of the second device.

In Example 90, the first device of Example 88 or 89, wherein the processing means is further for: determining an identifier of a fourth device (additional peripheral) based on a third wireless signal from the fourth device; determining a position of the fourth device based on a fourth wireless signal from the third device (AP); and wherein the processor generating the map further includes the processing means being for generating a map of the second device and the fourth device relative to the first device.

In Example 91, the first device of Example 90, wherein the second device and the fourth device include displays, and wherein the first device is further configured to adjust a setting of the first device for displaying an image on the second device and an image on the fourth device based on the position of the second device and the position of the fourth device.

In Example 92, the first device of any one of Examples 88 to 91, wherein the second device is peripheral device, connected to the first device.

In Example 93, the first device of any one of Examples 88 to 92, wherein the third device is a wireless access point.

In Example 94, the first device of any one of Examples 88 to 93, wherein the received position of the second device includes an absolute position of the second device.

In Example 95, the first device of any one of Examples 88 to 93, wherein the received position of the second device includes a position of the second device relative to the first device.

In Example 96, the first device of any one of Examples 88 to 95, wherein the first device is for receiving the first wireless signal according to a Bluetooth Low Energy protocol.

In Example 97, the first device of any one of Examples 88 to 96, wherein the first device is for receiving the second wireless signal according to an Institute of Electronics and Electrical Engineers 802.11 protocol.

In Example 98, the first device of any one of Examples 88 to 97, wherein the identifier includes an identifier of a type of peripheral corresponding to the second device.

In Example 99, the first device of any one of Examples 88 to 98, wherein the processing device is further for causing the map to be displayed on a screen.

In Example 100, the first device of any one of Examples 88 to 99, wherein the processing device is further for storing the map in a memory.

In Example 101, a first computing device, including: a processing device; and a radio communication device; wherein the processing device is for, in response to a predefined trigger, controlling the radio communication device to send an instruction to a second computing device, to which a plurality of peripheral devices are connected, to cause the plurality of peripheral devices to establish a wireless link to a first computing device.

In Example 102, the first computing device of Example 101, wherein the first computing device further includes: a first sensor, configured to detect changes in a magnetic field; and a second sensor, configured to detect movement of a component of the first computing device;

wherein the predefined trigger includes the first sensor generating sensor data representing a change in the magnetic field, and the second sensor generating sensor data representing no movement of the component.

In Example 103, the first computing device of Example 101 or 102, wherein the first sensor is a Hall Effect sensor.

In Example 104, the first computing device of any one of Examples 101 to 103, wherein the second sensor is an accelerometer.

While the above descriptions and connected figures may depict components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc.

Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

**Claims**

1. A first device, comprising:
   a processor, configured to:

   determine an identifier of a second wireless device based on a first wireless signal from the second device;
   determine a position of the second device based on a second wireless signal from a third device; and
   generate a map of the second device relative to the first device.

2. The first device of claim 1, further comprising a transceiver, configured to:

   receive the first wireless signal from a second device, wherein the first wireless signal represents an identifier of the second device;
   receive the second wireless signal from the third device, wherein the third wireless signal represents a position of the second device.

3. The first device of any one of claims 1 or 2, wherein the processor is further configured to:

   determine an identifier of a fourth device based on a third wireless signal from the fourth device;
   determine a position of the fourth device based on a fourth wireless signal from the third device; and
   wherein the processor generating the map further comprises the processor generating a map of the second device and the fourth device relative to the first device.

4. The first device of claim 3,
   wherein the second device and the fourth device comprise displays, and wherein the first device is further configured to adjust a setting of the first device for displaying an image on the second device and an image on the fourth device based on the position of the second device and the position of the fourth device.

5. The first device of any one of claims 1 to 4,

   wherein the second device is peripheral device, connected to the first device and wherein the third device is a wireless access point; and/or
   wherein the received position of the second device comprises an absolute position of the second device.

6. The first device of any one of claims 1 to 4,

   wherein the received position of the second device comprises a position of the second device relative to the first device; and/or
   wherein the first device is configured to receive the first wireless signal according to a Bluetooth Low Energy protocol and wherein the first device is configured to receive the second wireless signal according to an Institute of Electronics and Electrical Engineers 802.11 protocol.

7. The first device of any one of claims 1 to 6,

   wherein the identifier comprises an identifier of a type of peripheral corresponding to the second device; and/or
   wherein the processor is further configured to cause the map to be displayed on a screen and to store the map in a memory.

8. A wireless access point, comprising:

a processor, configured to:

determine a position of a first device based on a first wireless signal from the first device;
determine a position of a second device based on a second wireless signal from the second device; and
cause a transceiver to send a third wireless signal to the first device, wherein the third wireless signal represents a position of the second device; and

a memory, configured to:
store the determined position of the first device and the determined position of the second device.

9. The wireless access point of claim 8, further comprising:
a transceiver, configured to:

receive the first wireless signal from the first device; and
receive the second wireless signal from the second device.

10. The wireless access point of any one of claims 8 or 9,

wherein the processor determining the position of the first device comprises the processor determining the position of the first device based on an angle of arrival and a time of flight of the first wireless signal, and
wherein determining the position of the second device comprises determining the position of the second device based on an angle of arrival and a time of flight of the second wireless signal.

11. The wireless access point of any one of claims 8 to 10,

wherein the wireless access point is further configured to:
determine a new position of the second device based on a fourth wireless signal received from the second device; and
send a fifth wireless signal to the first device, wherein the fifth wireless signal represents an updated position of the second device relative to the first device.

12. The wireless access point of any one of claims 8 to 11,
wherein the third wireless signal represents a position of the second device relative to the first device.

13. A non-transitory computer readable medium, comprising instructions which, if executed, are configured to cause one or more processors to:

generate a peripheral group, comprising a plurality of peripheral devices having a wireless link to a first computing device; and
in response to a predefined trigger action, cause the plurality of peripheral devices to establish a wireless link to a second computing device.

14. The non-transitory computer readable medium of claim 13,

wherein causing the plurality of peripheral devices to establish a wireless link to the second computing device comprises instructing the plurality of peripheral devices to advertise to the second computing device; and/or
wherein causing the plurality of peripheral devices to establish a wireless link to the second computing device further comprises initiating a disconnection of the plurality of peripheral devices from the first device.

15. The non-transitory computer readable medium of any one of claims 13 or 14,

wherein the trigger action is a predefined movement of a mouse peripheral, and wherein the predefined movement of the mouse peripheral comprises completing a predefined number of revolutions around a circular path; and/or

wherein the trigger action comprises an instruction received from the second computing device to cause the plurality of peripheral devices to establish the wireless link to the second computing device.

**FIG. 1**

**FIG. 2**

FIG. 3

EP 4 576 839 A2

**FIG. 4**

| IOPG Group Mapping Table | RSCD-1 (Current Central) | RSCD-2 (Next in List) | RSCD-3 (Next in List) |
|---|---|---|---|
| Headset Device | ☑ | | |
| Wireless Mouse | ☑ | | |
| Wireless Keyboard | ☑ | | |
| Digital Pen/Joystick | ☑ | | |

**FIG. 5**

| User 606 | RSCD-1 608 | RSCD-2 610 | IOPG 612 |
|---|---|---|---|

**Configure 602**

User initiate IP peripheral group 614

Connect to each of IO devices 616

Connect-KB, Mouse, etc 618

From IO device connected create IOPG 620

Identify the RSCD 622

Receive the Broadcast 624

Join for reference sharing 626

Create RSCD list and share 628

**Trigger 604**

User trigger 630

Identify, pattern, notify IOPG devices to connect with RSCD-2 632

Initiate IOPG device to RSCD-2 634

Connect with IOPG 638

Connect with RSCD-2 636

**FIG. 6**

| IOPG Device 1 702 | IOPG Device 2,3 704 | RSCD-1 706 | RSCD-2 708 |
|---|---|---|---|

710 Initial configuration.
Bluetooth Low Energy Application Configured on IOPGs and RSCDs.
(Table with sequence of devices stored by application into RSCD and IOPG memory)

712 IOPG devices are connected concurrently on RSCD-1

Trigger action 714

716 Trigger Action transmitted

Application detects trigger action 718

Gesture detection, identification of next device 720

Schedule directed advertisement to next RSCD 722

Confirm 724
Initiate detach 726
Detach done 727
Direct advertisements for RSCD2 connection 728
Connection request 730
Connection complete 732

Schedule directed advertisement to next RSCD 734

Confirm 736
Initiate detach 738
Detach done 740
Direct advertisements for RSCD2 connection 742
Connection request 744
Connection complete 746

FIG. 7

Hall sensor interrupt 802

Is accel. / gyro. Value=1? 804

Is device range <=1cm? 808

Lid close event detected 806

Bluetooth device detected 810

Notify user via pop-up message 812

Device paired 814

**FIG. 8**

**Central**

Processor 904

Transceiver 906

First sensor 908

Second sensor 910

902

**Peripheral**

Display 922

Transceiver 924

920

**AP**

Processor 942

Transceiver 944

940

**Peripheral**

Display 962

Transceiver 964

960

Processor 942

Transceiver 944

980

**FIG. 9**